# FASCICULE DE BREVET EUROPEEN

(11) **EP 2 897 936 B1**
(45) Date de publication et mention de la délivrance du brevet: **21.10.2020**
(21) Numéro de dépôt: 13789605.6
(22) Date de dépôt: 17.09.2013
(51) Int. Cl.: C07C 407/00, C08F 14/06, C08F 4/34, C08K 5/14, C08F 2/20, C08L 71/02

(54) **COMPOSITION DE PEROXYDE ORGANIQUE SANS AGENT COLLOIDE**
ZUSAMMENSETZUNG AUS ORGANISCHEN PEROXIDEN OHNE EIN KOLLOIDMITTEL
COMPOSITION OF ORGANIC PEROXIDE WITHOUT A COLLOID AGENT

(30) Priorité: 21.09.2012 FR 1258875
(43) Date de publication de la demande: 29.07.2015
(73) Titulaire: Arkema France, 92700 Colombes (FR)
(72) Inventeur: TARTARIN, Isabelle, F-69600 Oullins (FR); NEUBAUER, Stéphanie, 86157 Augsburg (DE); LAGRAIN, Nicolas, F-38260 Champier (FR)
(74) Mandataire: Arkema Patent
(86) Numéro de dépôt international: PCT/FR2013/052129
(87) Numéro de publication internationale: WO 2014/044961

(56) Documents cités:
- EP-A1- 0 492 712
- WO-A1-00/42078
- FR-A1- 2 474 509
- FR-A1- 2 479 801
- US-A- 3 988 261
- US-A- 5 260 390

## Description

### Domaine de l'invention

L'invention a pour objet une composition aqueuse de peroxyde organique liquide à température de stockage, utilisable pour la polymérisation ou la copolymérisation de monomères éthyléniquement insaturés et en particulier de chlorure de vinyle. L'invention concerne plus particulièrement une composition aqueuse de peroxyde organique comprenant un tensioactif non ionique.

Les précautions inhérentes à l'instabilité des peroxydes organiques font partie intégrantes des connaissances bien connues de l'homme du métier. C'est d'ailleurs pour ses propriétés instables que les peroxydes organiques sont utilisés entre autres en tant qu'amorceur de polymérisation de monomères vinyliques.

Les peroxydes organiques les plus réactifs sont communément conditionnés sous forme d'une émulsion aqueuse en présence d'antigels. Ce conditionnement permet à la fois d'absorber et de dissiper l'énergie générée en cas d'éventuelles décompositions des peroxydes et de maintenir l'émulsion sous forme liquide, à des températures inférieures à -10°C, généralement inférieures à -20°C. Ce conditionnement limite ainsi une éventuelle décomposition involontaire des peroxydes.

Une émulsion comprend en plus d'eau et d'antigel, un émulsifiant qui permet d'abaisser la tension interfaciale entre la phase aqueuse et le peroxyde pour faciliter sa dispersion sous forme de gouttelettes et stabiliser ces dernières dans le temps (maintien des tailles).

Les émulsions de peroxydes organiques sont ainsi stabilisées non seulement pendant leurs productions mais surtout pendant une période relativement longue correspondant au transport et stockage avant utilisation finale en tant qu'amorceur de polymérisation.

Bien que ces précautions suffisent généralement à maintenir la sécurité de la manutention des peroxydes organiques, elles ne suffisent généralement pas à combler toutes les attentes des utilisateurs en termes de stabilité de la taille moyenne des gouttelettes dans le temps mais également en terme de viscosité de l'émulsion.

Au cours du temps, l'émulsion se déstabilise et la taille moyenne des gouttelettes de peroxyde augmente. L'augmentation de la taille des gouttelettes peut engendrer une séparation de phase. Selon les critères techniques minimums, une émulsion de peroxyde est considérée satisfaisante si la taille moyenne des gouttelettes ne dépasse pas 20 µm. Une taille moyenne de gouttelettes inférieure à 10 µm, plus avantageusement inférieure à 5 µm, est généralement requise, de même qu'une taille maximale ne dépassant pas les 20 µm.

Une utilisation d'une émulsion de peroxyde organique non homogène en tant qu'amorceur de polymérisation dans une émulsion ou suspension de monomère vinylique peut produire une inhomogénéité dans le produit final. Cette inhomogénéité est généralement caractérisée par des particules de polymère mal gélifiées lors de la mise en œuvre à l'état fondu (« fish eyes », grains durs). Or, La présence de grains durs opacifie le matériau polymère. Ces considérations de stabilités sont ainsi très importantes pour les applications où la transparence du produit final est impérative, notamment pour les applications médicales.

Ainsi les gouttelettes de péroxyde (par agglomération du ou des péroxydes présents dans l'émulsion, en particulier après un certain laps de temps) d'une émulsion de peroxyde organique doivent avoir une taille moyenne faible, une distribution étroite, et être stables dans le temps.

Les étapes de déchargement de l'émulsion dans des silos intermédiaires de stockage, de pompage et d'introduction d'une émulsion de peroxyde dans un réacteur de polymérisation sont des étapes importantes pour la qualité du polymère obtenu et la fiabilité du procédé de polymérisation. Ces étapes de manutention doivent être effectuées le plus rapidement possible. Pour se faire, il est crucial que l'émulsion de peroxyde présente une viscosité faible de sorte que l'écoulement de l'émulsion soit facilité au maximum. A une température donnée, la viscosité de ce type d'émulsion varie en particulier en fonction de la vitesse de cisaillement. Elle diminue lorsque la vitesse de cisaillement augmente et se stabilise pour des valeurs de vitesses généralement supérieures à 100 s⁻¹. Ainsi, une émulsion de peroxyde organique doit avoir une viscosité dynamique maximale de 1000 mPa.s (milliPascal seconde) à basse température, typiquement de l'ordre de -10°C pour une vitesse de cisaillement de 100 s⁻¹ (Les mesures de viscosité dynamique sont réalisées à l'aide de cylindres coaxiaux qui créent le cisaillement, par exemple selon la norme DIN 53019).

Or, l'homme du métier sait que pour ce type d'émulsion, chercher à diminuer la taille des gouttelettes contribue à augmenter la viscosité. (Voir paragraphe 1.4 de l'article de JP Canselier et M.Poux, « Procédés d'émulsification - Mécanisme de formation des émulsions » Techniques de l'Ingénieur J2 152, pp 1-12, publication du 10 juin 2004).

Ainsi, atteindre ces deux objectifs principaux simultanément est une difficulté importante pour l'homme du métier en raison des choix antinomiques qu'il est amené à envisager.

### Etat de l'art

Le document WO 99/05101 divulgue l'utilisation de polyvinyle acétate (PVA) partiellement hydrolysé en tant que colloïde protecteur en combinaison avec des surfactants non ioniques ayant une valeur HLB (balance hydrophile-lipophile) supérieure à 16, pour des émulsions aqueuses de peroxyesters. Une émulsion de peroxyde nécessite une viscosité faible. Ainsi, ce document précise qu'un surfactant avec une HLB inférieure à 16 peut augmenter la viscosité finale de l'émulsion.

De la même manière, le document WO 03/095500 divulgue l'utilisation de PVA partiellement hydrolysé en combinaison avec des surfactants non ioniques ayant une valeur HLB (balance hydrophile-lipophile) supérieure à 15, pour des émulsions aqueuses de peroxydicarbonates ou peroxydes de diacyles. Ce document précise également que l'ajout de surfactants, avec une HLB inférieure à 10, a un effet néfaste et augmente la viscosité finale de l'émulsion de peroxyde organique.

Le document US 3,988,261 énumère une large de gamme de surfactants, tant anionique, cationique que non ionique ; mais ne divulgue que l'utilisation de polyvinyle acétate en tant que colloïde protecteur pour la stabilisation d'émulsion de peroxyde organique.

Les compositions d'émulsions aqueuses de peroxyde organique décrites dans US 5 260 390 A contiennent un ou plusieurs peroxydes organiques, un agent antigel et au moins un tensioactif anionique ou non ionique et/ou un colloïde protecteur.

Il n'existe à l'heure actuelle aucun document de l'état de la technique qui ne divulgue exclusivement l'utilisation d'émulsifiants non ioniques autre que le polyvinyle acétate partiellement hydrolysé ou des dérivés de cellulose pour la stabilisation d'émulsion de peroxyde organique. Ainsi le choix du tensioactif est primordial pour les propriétés finales de l'émulsion, et a été obtenu jusqu'alors par l'utilisation d'un agent colloïde protecteur (acétate de polyvinyle partiellement hydrolysé ou dérivés de cellulose) utilisé seul ou en combinaison avec des tensioactifs non ioniques autre que l'acétate de polyvinyle partiellement hydrolysé (PVA).

Un PVA est conditionné sous forme de poudre fine. Dans un procédé industriel, les produits sont avantageusement introduits sous forme liquide. Une étape de dissolution pour la préparation d'une solution aqueuse de PVA est ainsi nécessaire. Cette étape de préparation représente une étape supplémentaire. La mise en solution de PVA est difficile et demande un temps de préparation relativement long, ce qui présente donc un cout additionnel important. La dissolution de PVA dans l'eau peut également former des gels. Ces gels non dissous nécessitent d'être éliminés par la présence d'un ou plusieurs filtres avant l'introduction dans une composition de peroxyde. La capacité de dissolution de ces tensioactifs est fonction de leurs degrés d'hydrolyse. Plus particulièrement, à concentration égale, il est plus difficile d'homogénéiser une solution aqueuse d'un PVA ayant un degré d'hydrolyse élevé et d'introduire cette solution dans un réacteur, qu'une solution contenant un PVA à plus faible degré d'hydrolyse.

De plus, la manutention de poudre à l'échelle industrielle, peut représenter pour un opérateur des précautions supplémentaires en termes d'hygiène et de sécurité relativement aux risques de ces poudres (présence de fines particules, risques liés aux poussières...).

Idéalement un agent de surface tel que le PVA doit être, à température ambiante, sous forme liquide ou sous forme de pâte, afin de faciliter sa dissolution dans une solution aqueuse ou son introduction directe dans un procédé industriel.

Ainsi, au regard de ses nombreux inconvénients, il est souhaitable de remplacer l'acétate de polyvinyle (PVA) en tant qu'agent émulsifiant d'une composition aqueuse de peroxyde organique.

### Brève description de l'invention

La demanderesse a découvert que l'utilisation d'un émulsifiant non ionique selon l'invention sans colloïde protecteur, stabilise de façon surprenante une émulsion aqueuse de peroxyde organique et répond aux conditions requises concernant la taille de gouttelettes, la viscosité et le temps d'écoulement de l'émulsion. La demanderesse a aussi découvert que l'ajout d'un émulsifiant selon l'invention permet l'obtention d'une émulsion de peroxyde organique moins visqueuse que celle communément obtenu avec un colloïde protecteur PVA ou un mélange de ce colloïde protecteur PVA en combinaison avec d'autres émulsifiants non ioniques.

La présente invention concerne ainsi, une composition d'émulsion aqueuse selon la revendication 1.

L'invention présente les avantages suivants et permet ainsi l'obtention:
- d'une émulsion présentant une taille moyenne de gouttelettes faible avec une distribution de tailles homogène et monomodale, sans apparition de gel ;
- d'une émulsion comprenant une taille moyenne de gouttelettes (d₅₀) inférieure à 10 µm après production ou au cours du stockage à -20°C pendant au moins quatre mois, la taille moyenne étant stabilisé pendant au moins quatre mois. La taille maximale (d₁₀₀) des gouttelettes ne dépasse pas les 20 µm ;
- d'une émulsion compatible avec la polymérisation de dérivés éthyléniquement insaturés et en particulier de monomères vinyliques tels que le monomère de chlorure de vinyle, d'une émulsion liquide, ayant une très faible viscosité autorisant un temps d'écoulement très court ;
- d'une émulsion dont le temps de préparation au niveau industriel est avantageusement réduit, en particulier grâce à l'absence de préparation de la solution de colloïde protecteur type PVA partiellement hydrolysé dans l'eau ;
- d'une émulsion minimisant les risques liés à la manipulation de poudres (sécurité et hygiène/santé des opérateurs).

D'autres caractéristiques de l'invention sont présentées ci-après :
- de préférence, l'huile végétale ou animale alcoxylée est choisie parmi les dérivés de mono, di ou triglycérides éthoxylés et leurs mélanges ;
- avantageusement, l'huile végétale ou animale alcoxylée comprend un mélange de glycérol éthoxylé relié ou non à une ou des chaines d'acides gras, ces derniers étant éthoxylés ou non, d'acides gras éthoxylés sur la fonction acide et/ou sur la fonction hydroxyle portée par la chaine d'acide gras, ainsi que des proportions variables d'acides gras, de glycérol et de mono, di ou triglycérides ;
- de préférence, l'alcool gras comprend une chaine de 4 à 60 et de préférence 4 à 20 atomes de carbone linéaire, ou ramifiée, cyclique ou non, saturée ou insaturée, aromatique ou non et entre 3 et 80 motifs d'oxyde d'alkylène, de préférence entre 20 et 40 ;
- de préférence, l'acide gras alcoxylé comprend une chaine de 4 à 60 et de préférence 4 à 20 atomes de carbone linéaire, ou ramifiée, cyclique ou non, saturée ou insaturée, aromatique ou non et entre 3 et 80 motifs d'oxyde d'alkylène, de préférence entre 20 et 40 ;
- selon une possibilité offerte par l'invention, l'huile végétale est éthoxylée ou hydrogénée éthoxylée, telle que en particulier une huile de ricin éthoxylée ou huile de ricin hydrogénée éthoxylée ;
- avantageusement, le copolymère à blocs comprend au moins deux blocs d'oxyde d'alkylène, le dit bloc d'oxyde d'alkylène comprenant entre 5 et 80 motifs ; par ailleurs, les motifs d'oxyde d'alkylène sont de préférence des motifs d'oxyde d'éthylène seuls ou oxyde d'éthylène et oxyde de propylène et/ou oxyde de butylène ;
- avantageusement, le tensioactif non ionique est présent à une concentration comprise entre 0,05 à 5% en poids dans l'émulsion, de préférence comprise entre 0,1 à 3% en poids ;
- de préférence, la composition selon l'invention comprend plus de 30% en poids d'un ou plusieurs peroxydes organiques, préférentiellement plus de 45% en poids ;
- avantageusement, le ou les peroxydes organiques sont choisis parmi les peroxyesters, les peroxydicarbonates et/ou les peroxydes de diacyles.

Il doit être noté que certains composants, tels que les copolymères à blocs, formant l'objet de la présente invention se présentent parfois, selon leurs masses molaires, sous forme de poudre. Préférentiellement, afin de palier aux problèmes de sécurité et d'hygiène des opérateurs mentionnés précédemment, ces composants se présenteront idéalement sous forme liquide ou sous forme de pâte.

La présente invention concerne aussi un procédé de préparation de la composition selon l'invention décrite précédemment, caractérisé en ce qu'il comprend les étapes, éventuellement successives, de :
- dispersion de l'agent antigel, éventuellement au moins ledit additif, ainsi que l'agent émulsifiant dans de l'eau pour obtenir une phase aqueuse homogène, puis
- le peroxyde est ajouté à la phase aqueuse, et
- le mélange ainsi constitué est émulsionné au cours d'une étape d'émulsion à une température inférieure à 5°C.

Enfin, l'invention concerne l'utilisation de la composition décrite ci-dessus pour la polymérisation ou la copolymérisation de monomères éthyléniquement insaturés. De préférence, les monomères éthyléniquement insaturés comprennent le chlorure de vinyle.

La description qui va suivre est donnée uniquement à titre illustratif et non limitatif.

### Description détaillée de l'invention

L'invention concerne des émulsions de peroxyde organique concentré en émulsion, le dit peroxyde organique étant présent à une concentration de 10% à 65%, préférentiellement supérieure à 30% et plus préférentiellement supérieure à 45%, en poids de l'émulsion et est choisi parmi les peroxyesters, les peroxydicarbonates et les peroxydes de diacyle.

Parmi les peroxyesters, les peroxydes préférés sont α-cumyl peroxyneodécanoate, α-cumyl peroxyneoheptanoate, le 2,4,4 triméthylpentyl-2-peroxyneodécanoate, le 3-hydroxy-1,1 diméthylbutyl peroxyneodécanoate, le 3-hydroxy-1,1 diméthylbutyl peroxyneoheptanoate, le tert-amyl peroxypivalate, le tert-butyl peroxypivalate, le tert-butyl peroxyneoheptanoate, le 2,5-diméthyl-2,5 di (2-éthylhexanoyl peroxy) hexane, le tert-amyl peroxy 2-éthylhexanoate , le tert-butyl peroxy 2-éthylhexanoate, le -1,1,3,3 tétraméthyl butyl-peroxy-2 éthylhexanoate, le 3-hydroxy-1,1 diméthylbutylperoxy 2-éthylhexanoate, le tert-butyl peroxy isobutyrate et leurs mélanges.

Parmi les peroxydicarbonates, les peroxydes préférés sont le peroxydicarbonate de di-sec-butyl, le peroxydicarbonate de dibutyl, le peroxydicarbonate de diisopropyl, le peroxydicarbonate de di(2-éthylhexyl), le peroxydicarbonate de bis(3-methoxybutyl), le peroxydicarbonate de bis(isobutyl), le peroxydicarbonate de dineopentyl, le peroxydicarbonate de bis(1-methylheptyl), le peroxydicarbonate de bis[2-(2-methoxyethoxy)éthyl], le peroxydicarbonate de bis(3-methoxy-3-méthylbutyl), le peroxydicarbonate de bis(2-ethoxyéthyl) et leurs mélanges.

Parmi les peroxydes de diacyle, les peroxydes préférés sont le peroxyde de diisobutyroyl, le peroxyde de di(3,5,5-trimethylhexanoyl), le peroxyde de di(2-ethylhexanoyl), le peroxyde de di(2-ethylbutanoyl), ainsi que les peroxydes asymétriques tels que, le peroxyde de isobutyroyl octanoyl, le peroxyde de isobutyroyl decanoyl, le peroxyde de isobutyroyl lauroyl, le peroxyde de 2-ethylbutanoyl decanoyl, le peroxyde de 2-ethylhexanoyl lauroyl , et leurs mélanges.

Afin de pouvoir être stockée à des températures inférieures à -10°C, préférentiellement inférieures à -20°C, la composition selon l'invention comprend un antigel ou plus particulièrement un mélange d'antigels.

S'agissant de l'agent anti-gel, on peut citer par exemple les monoalcools, diols et triols tels que le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol et le butan-1,4-diol et leurs mélanges, ces mélanges comprenant au moins deux des agents anti-gel énumérés précédemment, l'un de type alcool léger et l'autre de type alcool lourd, avantageusement un mélange de methanol et de propane-1,2-diol.

L'émulsifiant selon l'invention ne comprend pas de colloïde protecteur et consiste en un tensioactif non ionique choisi parmi un copolymère triblocs tels que défini selon la revendication 1, ou un alcool gras alcoxylé ; ou un acide gras alcoxylé ou une huile végétale ou animale (hydrogénée ou non) alcoxylée ; ou un mélange de plusieurs de ces éléments.

Selon un mode de réalisation, l'émulsifiant selon l'invention peut consister en un copolymère à blocs comprenant au moins un bloc d'oxyde d'alkylène (choisi parmi les copolymères triblocs) ou un copolymère à blocs comprenant au moins deux blocs d'oxydes d'alkylène (choisi parmi les copolymères triblocs). Le bloc constitué de polymère d'oxyde d'alkylène est choisi parmi l'oxyde d'éthylène, de propylène ou de butylène. Un copolymère diblocs selon l'invention est un copolymère présentant un bloc d'oxyde d'alkylène, plus particulièrement d'oxyde d'éthylène, et un bloc ayant des propriétés hydrophobes communément connue de l'homme du métier, ledit polymère hydrophobe étant choisi parmi un bloc de polyéthylène ou de polypropylène peut être utilisé. Le copolymère triblocs selon l'invention comprenant au moins un bloc d'oxyde d'alkylène, est soit choisi parmi un copolymère constitué de deux blocs d'oxyde d'alkylène entourant un bloc de polymère hydrophobe communément connu de l'homme du métier ou soit un bloc de polymère d'oxyde d'alkylène entouré de deux blocs de polymère hydrophobe communément connue de l'homme du métier. Le bloc d'oxyde d'alkylène est majoritairement un bloc d'oxyde d'éthylène. Le copolymère triblocs selon l'invention contenant au moins deux blocs d'oxydes d'alkylène est choisi avec un premier bloc constitué majoritairement d'oxyde d'éthylène et minoritairement d'oxyde de propylène polymérisés simultanément ou exclusivement d'oxyde d'éthylène polymérisé, un second bloc constitué majoritairement d'oxyde de propylène et minoritairement d'oxyde de butylène polymérisés simultanément ou exclusivement d'oxyde de propylène polymérisé. Le troisième bloc a la même structure que le premier ou deuxième bloc décrit ci-dessus mais il n'est lié de manière covalente qu'au bloc de composition différente.

Selon un autre mode de réalisation, l'émulsifiant selon l'invention peut consister en un alcool gras alcoxylé caractérisé en ce qu'il comporte plus particulièrement des groupes oxyde d'éthylène, oxyde de propylène ou oxyde de butylène est en particulier un alcool gras comprenant des groupes chimiques d'oxyde d'éthylène polymérisés sur l'alcool gras et comprenant ou non des groupes d'oxyde de propylène et/ou d'oxyde de butylène polymérisés sur l'alcool gras, les différents groupes d'oxydes étant répartis de manière statistique ou à bloc. Parmi les alcools gras pouvant être utilisés on citera notamment l'octyl dodécanol, le décanol, l'alcool laurique, l'alcool oléocétylique, l'isodécanol, l'alcool caprique, l'alcool oxo isotridécanol, l'alcool cétostéarique, l'alcool caprylique, l'alcool myristique, l'alcool hexadécanoïque ou palmitique, l'alcool stéarique, l'alcool eicosanoïque ou arachidique, l'alcool béhénique, l'alcool oléïque, l'alcool eicosenoïque ou gadolique, l'alcool docosenoïque, l'acool ricinoléïque, l'alcool linoléïque, l'alcool linolénique etc....

Selon un mode préféré de réalisation, l'émulsifiant selon l'invention est un acide gras alcoxylé ou une huile végétale / animale (hydrogénée ou non) alcoxylée. Les acides gras alcoxylés sont caractérisés en ce qu'ils comportent plus particulièrement des groupes oxyde d'éthylène, oxyde de propylène ou oxyde de butylène. Ces acides gras comprennent en particulier des groupes chimiques d'oxyde d'éthylène polymérisés sur l'acide gras et/ou sur une fonction hydroxyle contenue sur la chaine grasse de l'acide et comprenant ou non des groupes d'oxyde de propylène et/ou d'oxyde de butylène polymérisés sur l'acide gras et/ou sur une fonction hydroxyle contenue sur la chaine grasse de l'acide, les différents groupes d'oxydes étant répartis de manière statistique ou à bloc. Les huiles végétales/animales (hydrogénées ou non) alcoxylées sont en particulier des dérivés de mono, di et triglycérides éthoxylés et comprennent un mélange complexe de glycérol éthoxylé relié ou non à une ou des chaines d'acides gras (eux-mêmes éthoxylés ou non), d'acides gras éthoxylés sur la fonction acide et/ou sur la fonction hydroxyle portée par la chaine d'acide gras, ainsi que des proportions variables d'acides gras, de glycérol et de mono, di ou triglycérides d'acides gras. L'acide gras a une structure chimique unique ou peut être un mélange de structures chimiques selon la nature de l'huile utilisée avant éthoxylation ou le mélange d'huiles utilisées avant l'éthoxylation. L'alcoxylation de l'huile se fait majoritairement avec de l'oxyde d'éthylène mais des blocs polymérisés d'oxyde de propylène et/ou de butylène peuvent également être insérés de manière statistique ou à blocs. Les acides gras liés au glycérol ou acides gras utilisés dans les acides gras alcoxylés ont des longueurs de chaine entre 4 et 60 atomes de carbone et de préférence 4 à 20 et le nombre de mole d'oxyde d'éthylène est compris entre 3 et 80 par mole d'acide, plus particulièrement compris entre 20 et 40. Plus spécifiquement, un intérêt particulier est apporté aux huiles végétales éthoxylées telles que l'huile de ricin éthoxylée et l'huile de ricin hydrogénée éthoxylée de 20 à 40 moles d'oxyde d'éthylène par mole d'acide ricinoléïque. On peut également citer des huiles éthoxylées dérivées des huiles de coprah, de palme, de palmiste, d'olive, d'arachide, de colza, de soja, de tournesol, de noix, de noisette, de coco, d'oeuillette, de safflor, de lin, de périlla, d'oïtica, et de bois de Chine.

On peut également citer des graisses éthoxylées à base d'huiles de suif, de tall brut ou raffiné, de baleine, d'hareng, et de sardine. L'ensemble de ces dérivés glycérides éthoxylés sont caractérisés en ce qu'ils comportent des mélanges de mono, di ou tri glycérides éthoxylés ainsi que des dérivés éthoxylés des acides gras et du glycérol correspondant. Ces acides gras sont notamment issus des acides gras saturés ou insaturés des acides caproïque, caprylique, caprique, laurique, myristique, palmitique, stéarique, arachique, béhénique, myristoléïque, palmitoléïque, oléïque, ricinoléïque, érucique, linoléïque, linolénique, oléostéarique, licanique, gadoléïque, ernéïque, et résinique.

Certains acides gras insaturés sont ou non hydrogénés comme dans le cas de l'huile de ricin éthoxylée ou le groupe ricinoléïque a ou non été en partie ou totalement hydrogéné.

On ne sort pas du cadre de l'invention, en utilisant un mélange d'émulsifiants selon l'invention.

L'émulsion selon l'invention peut également comprendre un ou plusieurs additifs destinés à procurer à la composition thermoplastique finale des propriétés/caractéristiques particulières. Ces additifs seront idéalement présents pour la polymérisation ou copolymérisation finale.

Ces additifs ne sont en aucun cas un polyvinyle acétate partiellement hydrolysé.

Ainsi, s'agissant de l'additif, il peut être choisi parmi les antioxydants ; les agents de protection UV ; les agents de mise en œuvre, ayant pour fonction d'améliorer l'aspect final lors de sa mise en œuvre, telles que les amides grasses, l'acide stéarique et ses sels, l'éthylène bis-stéaramide ou les polymères fluorés ; les agents anti-buée ; les agents anti-bloquants tels que la silice ou le talc ; les charges telles que le carbonate de calcium et les nanocharges comme par exemple les argiles ; les agents de couplage tels que les silanes ; les agents réticulants comme les peroxydes ; les agents antistatiques ; les agents nucléants ; les pigments ; les colorants ; les plastifiants ; les fluidifiants et les additifs retardateurs de flamme tels que les hydroxydes d'aluminium ou de magnésium.

L'émulsion aqueuse liquide de peroxyde organique de la présente invention peut éventuellement contenir des additifs incluant les agents ajusteurs de pH tels que les tampons phosphate et citrate, les agents chélatants, des biocides par exemple des fongicides, des antiozonants, des antioxidants, des antidégradants, des agents gonflants et des agents de démoulage.

L'émulsion aqueuse liquide de peroxyde organique de la présente invention peut également contenir des additifs habituellement utilisés pour stabiliser le peroxyde organique ou retarder sa décomposition tels que des phlegmatisants (isododécane, huile minérale etc...) ou des hydroperoxydes.

Ces additifs peuvent être ajoutés dans les quantités habituellement utilisées et connues de l'homme de l'art. Ces additifs sont généralement utilisés dans des teneurs comprises entre 10 ppm et 10 000 ppm en poids par rapport au poids de polyéthylène ou de copolymère d'éthylène final ou de polychlorure de vinyle final. Les plastifiants, les fluidifiants et les additifs retardateurs de flamme peuvent atteindre des quantités bien supérieures à 10 000 ppm.

L'invention concerne également un procédé de préparation de l'émulsion précédemment décrite, caractérisé en ce que l'agent antigel, éventuellement un ou des additifs ainsi qu'au moins un émulsifiant sont dispersés dans de l'eau pour obtenir une phase aqueuse homogène puis le peroxyde est ajouté à la dite phase aqueuse, le tout étant ensuite émulsionné au cours d'une étape d'émulsion à une température inférieure à 5°C (Celsius), de manière à limiter la dégradation prématurée du peroxyde et de préférence inférieure à -5°Celsius.

Les étapes mentionnées ci-dessus peuvent être exécutées dans l'ordre particulier prescrit ou dans un ordre différent.

Hormis les étapes successives particulières du procédé de préparation de la composition selon l'invention, la préparation de l'émulsion ne se distingue en rien des techniques et appareils bien connus de l'homme du métier. La température à laquelle on prépare l'émulsion n'est pas critique mais elle doit être suffisamment réduite pour éviter un taux important de décomposition dont le résultat serait une perte du titre. La température choisie dépend du péroxyde organique. Par ailleurs, pour préparer les émulsions aqueuses, on utilise classiquement de l'eau désionisée ou de l'eau distillée.

Le procédé de préparation comporte une étape d'émulsion avec un mélangeur à fort taux de cisaillement pour diviser et/ou homogénéiser au mieux le peroxyde dans la phase aqueuse. A titre d'exemple, on pourra citer des agitateurs à pales et à ancre à rotation mécanique, les agitateurs à hélice, c'est-à-dire un ou plusieurs agitateurs montés sur un arbre commun, les agitateurs à turbine, c'est-à-dire ceux comportant des chicanes fixes sur la cuve mélangeuse ou en position adjacente aux organes agitateurs. On peut également utiliser des broyeurs colloïdaux et des homogénéisateurs. Selon une caractéristique de réalisation, le procédé selon l'invention est caractérisé en ce que l'on utilise un mélangeur ultrasonique ou un mélangeur rotor-stator.

Suite à la préparation de l'émulsion, les étapes de pompage et d'introduction des émulsions dans un réacteur de polymérisation doivent être effectuées le plus rapidement possible. C'est ainsi que les émulsions de peroxyde doivent avoir une viscosité faible.

Ainsi, les émulsions de peroxydes organiques selon l'invention présentent une gamme de viscosité dynamique à -10°C, 100 s⁻¹, inférieure à 1000 mPa.s, préférentiellement inférieure à 700 mPa.s juste après production, (les mesures de viscosité sont mesurées par exemples selon la norme DIN 53019, bien connue de l'homme du métier, avec un appareil de type Viscotester Haake VT550, à -10°C et pour une vitesse de cisaillement de 100 s⁻¹).

Leur coulabilité ou temps d'écoulement mesuré par une technique de coupe consistométrique est inférieure à 200 secondes, préférentiellement inférieure à 100 secondes (DIN 53211, diamètre de la coupe de viscosité 4 mm, Température de 5°C).

Les étapes ultérieures de polymérisation ou de copolymérisation ne sont, dans le cadre de la présente invention, pas différentes de celle de l'art antérieur. La polymérisation du monomère de chlorure de vinyle se produit en suspension à une température d'initiation comprise entre 45 et 70°C.

L'invention a également trait à l'utilisation de l'émulsion définie ci-dessus pour la polymérisation ou la copolymérisation de monomères éthyléniquement insaturés. Un homopolymère est obtenu par polymérisation lorsqu'un seul monomère éthyléniquement insaturé est polymérisé. Un copolymère est obtenu par polymérisation lorsqu'au moins deux monomères éthyléniquement insaturés sont polymérisés. Il est entendu que les monomères sont capables de polymériser les uns avec les autres.

A titre de monomère éthyléniquement insaturé, on peut citer, les acrylates, esters vinyliques, monomère halogénure de vinyle, éthers vinyliques, compounds vinyliques aromatiques tels que le styrène, le butadiène, et préférentiellement le chlorure de vinyle.

L'émulsion de peroxyde organique selon la présente invention peut être utilisée dans des applications telles que la polymérisation de monomères acryliques, les réactions de modifications de polymères, les réactions de réticulation, les réactions de polymérisation en masse et les procédés de cuisson comme utilisés dans les résines polyesters insaturées.

### Obtention des formulations des compositions testées :

Les émulsions comprenant un tensioactif selon l'invention et celle comprenant un PVA comparatif sont préparées selon le même mode opératoire.

La phase aqueuse contenant le tensioactif, l'agent antigel et l'eau est agitée entre 500 et 1000 tpm (tour par minute) et maintenue à -5°C (Celsius). Le peroxyde organique est ajouté progressivement dans le réacteur contenant ce mélange eau/tensioactif/antigel. L'agitation est maintenue pendant trois minutes à 2000 tpm. L'ensemble est ensuite fortement agité à l'aide d'un appareil à ultrasons « Ultraturrax type S-25N 18G » pendant deux minutes à 9500 tpm, puis sous agitation à l'aide d'une pâle à 1000 tpm pendant une minute. Chaque émulsion se fait sur 200 grammes au total.

### Tests réalisés :

Les mesures de viscosité dynamique sont réalisées à l'aide d'un viscosimètre de type « Viscotester Haake VT550 ». Le dispositif de mesure est le « SV-DIN 53019 », se référant à la norme DIN 53019. La mesure s'effectue à l'aide de cylindres coaxiaux qui créent le cisaillement. Entre 5 à 10 ml (millilitre) d'émulsion est introduite dans la chambre de mesure maintenue à -10°C. Les valeurs données dans les exemples ci-dessous correspondant à une vitesse de cisaillement de 100 s⁻¹ et sont exprimées en mPa.s. La précision de la mesure est de ±10 % de la valeur indiquée.

Les mesures de temps d'écoulement sont réalisées à l'aide de coupes consistométriques selon la norme DIN 53211 (diamètre de la coupe de viscosité : 4 mm), bien connue de l'homme du métier. La mesure se fait sur 100 g d'émulsion après conditionnement à +5 °C. Les mesures de temps d'écoulement sont exprimées en secondes et la précision est de ±10 % de la valeur indiquée.

La taille des gouttelettes (d₁₀₀ et d₅₀) est déterminée par des moyens conventionnels en utilisant la technique de diffraction de la lumière. Le terme d₁₀₀ correspond au diamètre tel que 100% du volume de l'échantillon de gouttelettes de peroxyde organique dans l'émulsion aqueuse a un diamètre inférieur à d₁₀₀ et le terme d₅₀ correspond au diamètre moyen tel que 50% du volume des gouttelettes de peroxyde organique dans l'émulsion aqueuse a un diamètre inférieur à d₅₀. Les mesures sont faites en utilisant un dispositif de Malvern Master Sizer 2000® à température ambiante. La taille des gouttelettes d₅₀ ou d₁₀₀ sont donnés avec une précision de ± 0,5 µm (micromètre).

### Matières premières des compositions testées :

Principalement deux émulsions ont été préparées pour réaliser les tests permettant de caractériser les compositions, selon l'art antérieur et selon l'invention.

La première émulsion consiste en du di (2-éthyle hexyle peroxydicarbonate) à 60% en poids comprend:
- un système antigel qui est un mélange d'alcools de ratio massique 20/80 de propylène glycol/méthanol, de concentration globale 14% ;
- un ratio eau/antigel de 64/36 en poids ;
- un taux de di (2-éthyle hexyle peroxydicarbonate) de 60% en poids. Le di (2-éthyle hexyle peroxydicarbonate) est le Luperox® 223 de la société Arkema de pureté 97% ;
- un taux de tensioactif de 1.2% massique ;
- le complément est de l'eau distillée.

La seconde émulsion consiste en du Tert butyl peroxyneodécanoate à 50% en poids comprend :
- un système antigel qui est un mélange d'alcools de ratio massique 40/60 de propylène glycol/méthanol, de concentration globale 16% ;
- un ratio eau/antigel de 67/33 en poids ;
- un taux de tert butyl peroxyneodécanoate de 50% en poids. Le tert-butyl peroxyneodécanoate est le Luperox® 10 d'Arkema de pureté 97% ;
- un taux de tensioactif de 1.2% massique ;
- le complément est de l'eau distillée.

### Caractérisations des tensioactifs :

Les caractéristiques de l'agent émulsifiant selon l'invention et un colloïde protecteur de type polyvinyle acétate partiellement hydrolysé (PVA) comparatif sont présentées dans le tableau 1 ci-dessous.

Les agents émulsifiants la, 1b, 1c et 1d sont ici caractérisés par la détermination de la balance hydrophile-lipophile (HLB) qui permet d'apprécier la solubilité de tout agent tensioactif et par le nombre d'oxyde d'éthylène. La mesure HLB (de 1 à 40) et sa signification (plus la HLB est élevée, plus l'émulsifiant est hydrophile) sont bien connues de l'homme du métier. Le PVA est caractérisé par son degré de polymérisation et par son degré d'hydrolyse.

**TABLEAU 1**

| 1a | | | |
|---|---|---|---|
| | ratio moles d'oxyde d'éthylène/mole d'acide | | HLB |
| Remcopal® 20 (R20) | 20 | | 9,5 |
| Remcopal® R 4097 (R 4097) | 40 | | 13 |
| Remcopal® RH 4090 (RH 4090) | 40 | | 12,9 |

| 1b | | | |
|---|---|---|---|
| | ratio moles d'oxyde d'éthylène/mole d'alcool | | HLB |
| Alcool oléïque éthoxylé | 20 | | 15 |
| Alccol laurique éthoxylé | 20 | | 16 |
| 1-hexadécanol éthoxylé | 4 | | 9 |

| 1c | | | |
|---|---|---|---|
| | ratio moles d'oxyde d'éthylène/mole d'acide gras | | HLB |
| Tween® 20 (polyoxyéthylène monolaurate de sorbitan) | 20 | | 16.7 |
| Tween® 85 (polyoxyéthylène trioléate de sorbitan) | 20 | | 11 |

| 1d | | | |
|---|---|---|---|
| | Mn (g/mol) | | HLB |
| Copolymère PE-PEG (from Aldrich) (PE - PEG) | 920 (10 motifs d'oxyde d'éthylène) | | 10 |
| Copolymère PEG-PPG-PEG (Pluronic® PE 10500 from BASF) (PE 10500) | 6500 (74 motifs d'oxyde d'éthylène) | | 10 |

| 1e | | | |
|---|---|---|---|
| | degré d'hydrolyse | Degré de polymérisation | HLB |
| Polyvinyle acétate à taux d'hydrolyse de 73 (PVA 73) | 72-73 | 800 | - |

### Emulsions :

Les émulsions 1 à 6 correspondent à des émulsions de peroxyde de di(2-éthyle hexyle peroxydicarbonate), les émulsions 7 et 8 correspondent à des émulsions de peroxyde de tert butyl peroxyneodécanoate, et sont caractérisées dans les tableaux 2 et 3 :

**TABLEAU 2**

| | Emulsion 1-6 | Emulsion 7-8 |
|---|---|---|
| di(2-éthyle hexyle peroxydicarbonate), % | 60,0 | |
| tert butyl peroxyneodécanoate, % | | 50,0 |
| méthanol, % | 11,2 | 9,6 |
| propylène glycol, % | 2,8 | 6,4 |
| tensioactif, % | 1,2 | 1,2 |
| eau, % | 24,8 | 32,8 |

**TABLEAU 3**

| | d₅₀ (µm) | d₁₀₀ (µm) | Viscosité (mPa.s) | Temps d'écoulement (s) |
|---|---|---|---|---|
| Emulsion 1 (A 72,5) | 3,3 | 10,0 | 1100 | 145 |
| Emulsion 2 (R20) | 2,9 | 7,6 | 220 | 27 |
| Emulsion 3 (R4097) | 2,9 | 7,6 | 245 | 30 |
| Emulsion 4 (RH4090) | 3,6 | 10 | 265 | 31 |
| Emulsion 5 (Alcool oléïque éthoxylé) | 3,2 | 8,7 | 280 | 35 |
| Emulsion 5 a (Alcool laurique éthoxylé) | 2.2 | 5.0 | 260 | 32 |
| Emulsion 5 b (1 - hexadécanol éthoxylé) | 3 | 7.6 | 258 | 36 |
| Emulsion 5 c (polyoxyéthylène monolaurate de sorbitan) | 2.5 | 6.6 | 260 | 31 |
| Emulsion 5 d (polyoxyéthylène trioléate de sorbitan) | 3.0 | 7.6 | 149 | 20 |
| Emulsion 6 (PE-PEG) | 4,1 | 13 | 365 | 42 |
| Emulsion 6 a (PE 10500) | 2.9 | 7.6 | 341 | 39 |
| Emulsion 7 (A 72,5) | 3,3 | 8,7 | 620 | 70 |
| Emulsion 8 (R20) | 3,4 | 8,7 | 103 | 18 |

Les émulsions selon l'invention (émulsions 2-6 et 8) et l'émulsion comparative (émulsion 7) ont toutes des tailles moyennes de gouttelettes de peroxyde organique répondant aux caractéristiques drastiques demandées du domaine considéré. Par contre un des avantages prépondérants de la présente invention réside dans un abaissement majeur de la viscosité et du temps d'écoulement de l'émulsion de peroxyde résultante. En effet, la viscosité des émulsions résultante de la stabilisation des tensioactifs de la présente invention, à été réduite d'au moins d'un facteur 3, voire d'un facteur 5, par rapport à l'émulsion comparative. Cette amélioration très significative de la viscosité influe directement sur le temps d'écoulement, impliquant une réduction très importante du temps d'écoulement par rapport à l'essai comparatif.

D'une manière générale, une émulsion de peroxyester concentré à 50% massique est légèrement plus fluide qu'une émulsion de peroxydicarbonate concentrée à 60% massique. De la même manière que pour les émulsions de peroxydicarbonate, les émulsions de peroxyester stabilisées par les tensioactifs selon l'invention, sont plus fluides que celle stabilisée par du polyvinyle acétate partiellement hydrolysé. En effet, la viscosité de l'émulsion de peroxyester comprenant le tensioactif Remcopal^{®}20 a été réduite d'un facteur 6 par rapport à celle comprenant un PVA (émulsion 7). Ces très bons résultats permettent de réduire drastiquement le temps de pompage et d'introduction des émulsions de peroxyde dans un réacteur de polymérisation de monomère vinylique, type chlorure de vinyle.

Il doit être noté que les tests présentés ici n'incluent pas les peroxydes de diacyles mais les résultats obtenus sur les peroxyesters et les peroxycarbonates permettent d'envisager des résultats similaires avec les peroxydes de diacyls. Les péroxydes de diacyls ont en effet fait l'objet de tests préliminaires aussi satisfaisants que ceux obtenus avec les peroxyesters et les peroxydicarbonates.

Les émulsions réalisées avec un agent émulsifiant selon l'invention (émulsion 2 ci-dessous) et deux colloïdes protecteurs de type polyvinyle acétate partiellement hydrolysé comparatif (émulsions 1 et 1' ci-dessous), à taux d'hydrolyse du PVA respectivement à 72-73% (PVA 73) et 42-45% (PVA 42-45), sont stockées à -20°C pendant plusieurs mois. Les caractéristiques sont mesurées après différents temps de stockage. Les résultats sont présentés dans le tableau 4:

**TABLEAU 4**

| | Emulsion 1 (PVA 73) | Emulsion 1' (PVA 42-45) | Emulsion 2 (R20) | Emulsion 3 (R4097) |
|---|---|---|---|---|
| **d₅₀ (µm**) | | | | |
| t 0 | 3.3 | 4.0 | 2.9 | 2.9 |
| t 1 mois | 3.6 | 4.2 | 2.9 | 3.2 |
| t 2 mois | 3.7 | 4.2 | 3.0 | 3.3 |
| t 3mois | 3.8 | 4.4 | 3.0 | / |
| t 4 mois | 3.8 | 4.4 | 3.0 | 3.4 |

| **dₘₐₓ (µm)** | | | | |
|---|---|---|---|---|
| t 0 | 10.0 | 12.6 | 7.6 | 7.6 |
| t 1 mois | 10.0 | 13.2 | 7.6 | 8.7 |
| t 2 mois | 10.0 | 15.1 | 7.6 | 8.7 |
| t 3mois | 13.2 | 15.1 | 7.6 | / |
| t 4 mois | 13.2 | 15.1 | 7.6 | 8.8 |

| **Viscosité (mPas)** | | | | |
|---|---|---|---|---|
| t 0 | 1100 | 570 | 220 | 245 |
| t 1 mois | 1180 | 560 | 180 | 223 |
| t 2 mois | 1170 | 630 | 190 | 229 |
| t 3mois | 1170 | 670 | / | / |
| t 4 mois | 1140 | 680 | / | 232 |

| **Temps d'écoulement (s)** | | | | |
|---|---|---|---|---|
| t 0 | 145 | 67 | 27 | 30 |
| t 1 mois | 170 | 70 | 25 | 29 |
| t 2 mois | 171 | 77 | 23 | 26 |
| t 3 mois | 198 | 85 | 23 | / |
| t 4 mois | 205 | 89 | 23 | 28 |

L'émulsion comprenant l'agent émulsifiant de type huile de ricin éthoxylée (émulsions 2 et 3) selon l'invention et celle comprenant un colloïde protecteur de type polyvinyle acétate partiellement hydrolysé (émulsion 1) permettent de conserver une taille moyenne de gouttelette et une viscosité quasi constante après au minimum 4 mois de stockage.

Néanmoins, les résultats montrent un net avantage pour la composition selon l'invention (émulsions 2 et 3) au regard du critère de la taille des gouttelettes. En effet, que ce soit au regard de la taille moyenne (d₅₀) ou de la taille maximale (d₁₀₀), la composition selon l'invention affiche des résultats bien supérieurs à la composition comportant du PVA : la taille moyenne (dso) des gouttelettes de peroxyde dans la composition selon l'invention est plus de 25% inférieure à celle de la composition avec du PVA tandis que la taille maximale (d₁₀₀) des gouttelettes de la composition de l'invention est inférieure d'environ 25% à près de 35% à celle de la composition avec du PVA.

La viscosité de l'émulsion selon la présente invention reste très fluide et inférieure à 300 mPa.s (mesurées selon la norme DIN 53019 avec un Viscotester Haake VT550, à -10°C et pour une vitesse de cisaillement de 100 s⁻¹), les temps d'écoulement restent inférieurs à 50 secondes et préférentiellement inférieurs à 30 secondes et les tailles maximales d₁₀₀ ne dépassent pas 20 µm (micromètre), préférentiellement 10 µm (micromètre).

Par contre seule l'émulsion comprenant un tensioactif selon l'invention permet de conserver un temps d'écoulement quasi constant tout au long du temps de stockage d'au minimum 4 mois.

De manière générale, seules les compositions d'émulsion aqueuse de peroxyde selon l'invention permettent de résoudre de façon particulièrement satisfaisante les deux problèmes techniques majeurs, à savoir le grossissement des gouttelettes de peroxydes dans le temps ou autrement dit la stabilité de l'émulsion, la viscosité à froid de l'émulsion souvent trop élevée, entrainant notamment des temps d'écoulement non satisfaisants.

## Revendications

1. Composition d'émulsion aqueuse de peroxyde organique sans agent colloïde protecteur, c'est-à-dire un acétate de polyvinyle partiellement hydrolysé ou dérivés de cellulose, consistant en:
- de 10 à 65% en poids d'un ou plusieurs peroxydes organiques,
- de 2 à 25% en poids d'au moins un agent antigel,
- de 0,01 à 10% en poids d'un agent émulsifiant,
- éventuellement au moins un additif,
- de l'eau, dont la quantité est déterminée de manière à former le reste de la composition jusqu'à 100%,
**caractérisée en ce que** l'agent émulsifiant consiste en un tensioactif non ionique choisi exclusivement parmi :
- un copolymère triblocs comprenant au moins un bloc d'oxyde d'alkylène dans lequel le copolymère est constitué de deux blocs d'oxyde d'alkylène entourant un bloc de polymère hydrophobe ou d'un bloc de polymère d'oxyde d'alkylène entouré de deux blocs de polymère hydrophobe, ledit polymère hydrophobe étant choisi parmi le polyéthylène et le polypropropylène, ou
- un copolymère triblocs comprenant : un premier bloc constitué majoritairement d'oxyde d'éthylène et minoritairement d'oxyde de propylène polymérisés simultanément ou exclusivement d'oxyde d'éthylène polymérisé, un second bloc constitué majoritairement d'oxyde de propylène et minoritairement d'oxyde de butylène polymérisés simultanément ou exclusivement d'oxyde de propylène polymérisé, un troisième bloc ayant la même structure que le premier ou deuxième bloc décrit ci-dessus mais il n'est lié de manière covalente qu'au bloc de composition différente,
- un alcool gras alcoxylé ; ou
- un acide gras alcoxylé, ou
- une huile végétale ou animale, hydrogénée ou non, alcoxylée ; ou
- un mélange de plusieurs de ces éléments.

2. Composition selon la revendication 1, **caractérisée en ce que** l'huile végétale ou animale alcoxylée est choisie parmi les dérivés de mono, di ou triglycérides éthoxylés et leurs mélanges.

3. Composition selon la revendication 1 ou 2, **caractérisée en ce que** l'huile végétale ou animale alcoxylée comprend un mélange de :
- glycérol éthoxylé relié ou non à une ou des chaines d'acides gras, ces derniers étant éthoxylés ou non,
- d'acides gras éthoxylés sur la fonction acide et/ou sur la fonction hydroxyle portée par la chaine d'acide gras, ainsi que
- des proportions variables d'acides gras, de glycérol et de mono, di ou triglycérides.

4. Composition selon l'une quelconque des revendications 1 à 3, **caractérisée en ce que** l'alcool gras comprend une chaine de 4 à 60 et de préférence 4 à 20 atomes de carbone linéaire, ou ramifiée, cyclique ou non, saturée ou insaturée, aromatique ou non et entre 3 et 80 motifs d'oxyde d'alkylène, de préférence entre 20 et 40.

5. Composition selon l'une quelconques des revendications précédentes, **caractérisée en ce que** l'huile végétale est éthoxylée ou hydrogénée éthoxylée, telle que en particulier une huile de ricin éthoxylée ou huile de ricin hydrogénée éthoxylée.

6. Composition selon la revendication 1, **caractérisée en ce que** l'alcool gras comprend une chaine de 4 à 60 et de préférence 4 à 20 atomes de carbone linéaire, ou ramifiée, cyclique ou non, saturée ou insaturée, aromatique ou non et entre 3 et 80 motifs d'oxyde d'alkylène, de préférence entre 20 et 40.

7. Composition selon la revendication 1, **caractérisée en ce que** le copolymère à blocs comprend au moins deux blocs d'oxyde d'alkylène, le dit bloc d'oxyde d'alkylène comprenant entre 5 et 80 motifs.

8. Composition selon la revendication 6, **caractérisée en ce que** les motifs d'oxyde d'alkylène sont des motifs d'oxyde d'éthylène seuls ou oxyde d'éthylène et oxyde de propylène et/ou oxyde de butylène.

9. Composition selon l'une quelconques des revendications précédentes **caractérisée en ce que** le tensioactif non ionique est présent à une concentration comprise entre 0,05 à 5% en poids dans l'émulsion, de préférence comprise entre 0,1 à 3% en poids.

10. Composition selon l'une quelconque des revendications précédentes, **caractérisée en ce qu'**elle comprend plus de 30% en poids d'un ou plusieurs péroxydes organiques, préférentiellement plus de 45% en poids.

11. Composition selon l'une quelconque des revendications précédentes, **caractérisée en ce que** le ou les peroxydes organiques sont choisis parmi les peroxyesters, les peroxydicarbonates et/ou les peroxydes de diacyles.

12. Procédé de préparation de la composition selon l'une quelconque des revendications précédentes, **caractérisé en ce qu'**il comprend les étapes, éventuellement successives, de :
- dispersion de l'agent antigel, éventuellement au moins ledit additif, ainsi que l'agent émulsifiant dans de l'eau pour obtenir une phase aqueuse homogène, puis
- le peroxyde est ajouté à la phase aqueuse, et
- le mélange ainsi constitué est émulsionné au cours d'une étape d'émulsion à une température inférieure à 5°C.

13. Utilisation de la composition selon l'une des revendications 1 à 11 pour la polymérisation ou la copolymérisation de monomères éthyléniquement insaturés.

14. Utilisation selon la revendication 13, **caractérisée en ce que** les monomères éthyléniquement insaturés comprennent le chlorure de vinyle.

## Patentansprüche

1. Wässrige Emulsionszusammensetzung von organischem Peroxid ohne Schutzkolloidmittel, d. h. ein teilhydrolysiertes Polyvinylacetat oder Cellulosederivate, bestehend aus:
- 10 bis 65 Gew.-% eines oder mehrerer organischer Peroxide,
- 2 bis 25 Gew.-% mindestens eines Gefrierschutzmittels,
- 0,01 bis 10 Gew.-% eines Emulgators,
- gegebenenfalls mindestens einem Additiv,
- Wasser, dessen Menge so bestimmt ist, dass sie den Rest der Zusammensetzung auf 100 % bildet,
**dadurch gekennzeichnet, dass** der Emulgator aus einem nichtionischen Tensid besteht, das ausschließlich aus
- einem Triblock-Copolymer mit mindestens einem Alkylenoxidblock, wobei das Copolymer aus zwei Alkylenoxidblöcken, die einen Block von hydrophobem Polymer umgeben, oder aus einem Alkylenoxidpolymerblock, der von zwei Blöcken aus hydrophobem Polymer umgeben ist, besteht, wobei das hydrophobe Polymer aus Polyethylen und Polypropylen ausgewählt ist, oder
- einem Triblock-Copolymer mit einem ersten Block, der mehrheitlich aus Ethylenoxid und minderheitlich aus Propylenoxid, die gleichzeitig polymerisiert wurden, oder ausschließlich aus polymerisiertem Ethylenoxid besteht, einem zweiten Block, der mehrheitlich aus Propylenoxid und minderheitlich aus Butylenoxid, die gleichzeitig polymerisiert wurden, oder ausschließlich aus polymerisiertem Propylenoxid besteht, und einem dritten Block mit der gleichen Struktur wie der oben beschriebene erste oder zweite Block, der aber nur an den Block mit einer anderen Zusammensetzung kovalent gebunden ist,
- einem alkoxylierten Fettalkohol oder
- einer alkoxylierten Fettsäure oder
- einem alkoxylierten, gegebenenfalls hydrierten pflanzlichen oder tierischen Öl oder
- einer Mischung mehrerer dieser Elemente
ausgewählt ist.

2. Zusammensetzung nach Anspruch 1, **dadurch gekennzeichnet, dass** das alkoxylierte pflanzliche oder tierische Öl aus ethoxylierten Derivaten von Mono-, Di- oder Triglyceriden und Mischungen davon ausgewählt ist.

3. Zusammensetzung nach Anspruch 1 oder 2, **dadurch gekennzeichnet, dass** das alkoxylierte pflanzliche oder tierische Öl eine Mischung von
- ethoxyliertem Glycerin, das gegebenenfalls an ein oder mehrere Fettsäureketten gebunden ist, wobei letztere gegebenenfalls ethoxyliert sind,
- an der Säurefunktion und/oder an der Hydroxylfunktion der Fettsäurekette ethoxylierten Fettsäuren sowie
- variablen Anteilen von Fettsäuren, Glycerin und Mono-, Di- oder Triglyceriden
umfasst.

4. Zusammensetzung nach einem der Ansprüche 1 bis 3, **dadurch gekennzeichnet, dass** der Fettalkohol eine aromatische oder nichtaromatische, gesättigte oder ungesättigte, cyclische oder acyclische, lineare oder verzweigte Kette mit 4 bis 60 und vorzugsweise 4 bis 20 Kohlenstoffatomen und zwischen 3 und 80 Alkylenoxid-Einheiten, vorzugsweise zwischen 20 und 40, umfasst.

5. Zusammensetzung nach einem der vorhergehenden Ansprüche, **dadurch gekennzeichnet, dass** das pflanzliche Öl ethoxyliert oder hydriert und ethoxyliert ist, wie insbesondere ein ethoxyliertes Rizinusöl oder ethoxyliertes hydriertes Rizinusöl.

6. Zusammensetzung nach Anspruch 1, **dadurch gekennzeichnet, dass** der Fettalkohol eine aromatische oder nichtaromatische, gesättigte oder ungesättigte, cyclische oder acyclische, lineare oder verzweigte Kette mit 4 bis 60 und vorzugsweise 4 bis 20 Kohlenstoffatomen und zwischen 3 und 80 Alkylenoxid-Einheiten, vorzugsweise zwischen 20 und 40, umfasst.

7. Zusammensetzung nach Anspruch 1, **dadurch gekennzeichnet, dass** das Blockcopolymer mindestens zwei Alkylenoxidblöcke umfasst, wobei der Alkylenoxidblock zwischen 5 und 80 Einheiten umfasst.

8. Zusammensetzung nach Anspruch 6, **dadurch gekennzeichnet, dass** es sich bei den Alkylenoxid-Einheiten um Ethylenoxid-Einheiten alleine oder Ethylenoxid-und Propylenoxid- und/oder Butylenoxid-Einheiten handelt.

9. Zusammensetzung nach einem der vorhergehenden Ansprüche, **dadurch gekennzeichnet, dass** das nichtionische Tensid in einer Konzentration zwischen 0,05 und 5 Gew.-% in der Emulsion vorliegt, vorzugsweise zwischen 0,1 und 3 Gew.-%.

10. Zusammensetzung nach einem der vorhergehenden Ansprüche, **dadurch gekennzeichnet, dass** sie mehr als 30 Gew.-% eines oder mehrerer organischer Peroxide, vorzugsweise mehr als 45 Gew.-%, umfasst.

11. Zusammensetzung nach einem der vorhergehenden Ansprüche, **dadurch gekennzeichnet, dass** das organische Peroxid bzw. die organischen Peroxide aus Peroxyestern, Peroxydicarbonaten und/oder Diacylperoxiden ausgewählt ist bzw. sind.

12. Verfahren zur Herstellung der Zusammensetzung nach einem der vorhergehenden Ansprüche, **dadurch gekennzeichnet, dass** es die folgenden, gegebenenfalls aufeinanderfolgenden, Schritte umfasst:
- Dispergieren des Gefrierschutzmittels, gegebenenfalls mindestens des Additivs sowie des Emulgators in Wasser zum Erhalt einer homogenen wässrigen Phase, wonach
- das Peroxid zu der wässrigen Phase gegeben wird und
- die so gebildete Mischung im Lauf eines Emulgierschritts bei einer Temperatur von weniger als 5 °C emulgiert wird.

13. Verwendung der Zusammensetzung nach einem der Ansprüche 1 bis 11 zur Polymerisation oder Copolymerisation von ethylenisch ungesättigten Monomeren.

14. Verwendung nach Anspruch 13, **dadurch gekennzeichnet, dass** die ethylenisch ungesättigten Monomere Vinylchlorid umfassen.

## Claims

1. Aqueous organic peroxide emulsion composition devoid of protective colloid agent, namely a partially hydrolyzed polyvinyl acetate or cellulose derivatives, consisting of:
- from 10% to 65% by weight of one or more organic peroxides,
- from 2% to 25% by weight of at least one antifreeze agent,
- from 0.01% to 10% by weight of an emulsifying agent,
- optionally at least one additive,
- water, the amount of which is determined so as to form the remainder of the composition up to 100%,
**characterized in that** the emulsifying agent consists of a nonionic surfactant chosen exclusively from:
- a triblock copolymer comprising at least one alkylene oxide block, wherein the copolymer consists of two alkylene oxide blocks surrounding a block of hydrophobic polymer, or of a block of alkylene oxide polymer surrounded by two blocks of hydrophobic polymer, said hydrophobic polymer being chosen from polyethylene and polypropylene, or
- a triblock copolymer comprising: a first block consisting predominantly of ethylene oxide and to a minor extent of propylene oxide polymerized simultaneously or exclusively of polymerized ethylene oxide, a second block consisting predominantly of propylene oxide and to a minor extent of butylene oxide polymerized simultaneously or exclusively of polymerized propylene oxide, a third block having the same structure as the first or second block described above but being covalently bonded only to the block having a different composition,
- an alkoxylated fatty alcohol; or
- an alkoxylated fatty acid; or
- an alkoxylated, hydrogenated or not, vegetable or animal oil; or
- a mixture of several of these components.

2. Composition according to Claim 1, **characterized in that** the alkoxylated vegetable or animal oil is chosen from ethoxylated derivatives of mono-, di- or triglycerides and their mixtures.

3. Composition according to Claim 1 or 2, **characterized in that** the alkoxylated vegetable or animal oil comprises a mixture of:
- ethoxylated glycerol connected or not to one or more chains of fatty acids, the latter being ethoxylated or not,
- fatty acids ethoxylated on the acid functional group and/or on the hydroxyl functional group carried by the fatty acid chain, and also
- variable proportions of fatty acids, of glycerol and of mono-, di- or triglycerides.

4. Composition according to any one of Claims 1 to 3, **characterized in that** the fatty alcohol comprises a chain of 4 to 60 and preferably 4 to 20 carbon atoms, linear or branched, cyclic or not, saturated or unsaturated, aromatic or not, and between 3 and 80 alkylene oxide units, preferably between 20 and 40.

5. Composition according to any one of the preceding claims, **characterized in that** the vegetable oil is ethoxylated or ethoxylated hydrogenated, such as, in particular, an ethoxylated castor oil or ethoxylated hydrogenated castor oil.

6. Composition according to Claim 1, **characterized in that** the fatty alcohol comprises a chain of 4 to 60 and preferably 4 to 20 carbon atoms, linear or branched, cyclic or not, saturated or unsaturated, aromatic or not, and between 3 and 80 alkylene oxide units, preferably between 20 and 40.

7. Composition according to Claim 1, **characterized in that** the block copolymer comprises at least two alkylene oxide blocks, said alkylene oxide block comprising between 5 and 80 units.

8. Composition according to Claim 6, **characterized in that** the alkylene oxide units are ethylene oxide units alone or ethylene oxide and propylene oxide and/or butylene oxide units.

9. Composition according to any one of the preceding claims, **characterized in that** the nonionic surfactant is present at a concentration of between 0.05% and 5% by weight in the emulsion, preferably of between 0.1% and 3% by weight.

10. Composition according to any one of the preceding claims, **characterized in that** it comprises more than 30% by weight of one or more organic peroxides, preferably more than 45% by weight.

11. Composition according to any one of the preceding claims, **characterized in that** the organic peroxide or peroxides are chosen from peroxyesters, peroxydicarbonates and/or diacyl peroxides.

12. Process for the preparation of the composition according to any one of the preceding claims, **characterized in that** it comprises the optionally successive steps of:
- dispersion of the antifreeze agent, optionally at least said additive and also the emulsifying agent in water to obtain a homogeneous aqueous phase, then
- the peroxide is added to the aqueous phase, and
- the mixture thus formed is emulsified during an emulsion stage at a temperature of less than 5°C.

13. Use of the composition according to one of Claims 1 to 11 for the polymerization or the copolymerization of ethylenically unsaturated monomers.

14. Use according to Claim 13, **characterized in that** the ethylenically unsaturated monomers comprise vinyl chloride.
